# EUROPEAN PATENT APPLICATION

(11) **EP 4 386 465 A1**
(43) Date of publication of application: **19.06.2024**
(21) Application number: 22213849.7
(22) Date of filing: 15.12.2022
(51) Int. Cl.: G02B 21/36, G01N 1/28, G06V 10/82

(54) **COMBINING MICROSCOPY WITH FURTHER ANALYSIS FOR ADAPTATION**

(71) Applicant: Leica Microsystems CMS GmbH, 35578 Wetzlar (DE)
(72) Inventor: SCHLAUDRAFF, Falk, 35578 Wetzlar (DE)
(74) Representative: Maiwald GmbH

(57) **Abstract**

A method (100) for adapting at least one step in a sequence of steps for processing and analyzing a sample is disclosed. The method (100) comprises capturing (104), by a microscope (210), at least one image of a first prepared sample, identifying (106) at least one target or area of interest in the at least one image using a neural network, analyzing (108) at least a part of the first prepared sample, the part of the first prepared sample corresponding to the identified at least one target or area of interest, and adapting (110), based on a comparison of a result of the analysis of the at least a part of the first prepared sample with data obtained from the at least one image of the first prepared sample, at least one of: a preparation of a second sample, capturing of at least one image of a second prepared sample, and the neural network.

## Description

### Technical Field

The present disclosure relates to microscopy. In particular, the present disclosure relates to the combination of microscopy with a further technique for analyzing samples.

### Background

Life science research involves the scientific study of living organisms and their life processes. This includes investigating the organization of cells and tissues, and how this organization influences the function of these cells and tissue. Sequencing approaches have provided information about cell types and their heterogeneity in complex tissues.

Spatially resolved transcriptomics are able to elucidate single-cell heterogeneity and define cell types while also retaining spatial information. This maintenance of spatial context is crucial for understanding key aspects of cell biology, developmental biology, neurobiology, tumor biology and more, as specialized cell types and their specific organization are crucially tied to biological activity and remain poorly explored on the scale of whole tissues and organisms. Spatially resolved transcriptomics technology may be used to generate complete maps of large and complex tissues like the human brain.

Spatially resolved transcriptomics studies are carried out in one of two ways. Transcriptomes can be read out by microscopy through in situ sequencing or multiplexed fluorescence in situ hybridization (FISH). Alternatively, RNA is captured in a way that retains spatial information while sequencing is done using ex situ RNA-seq. These approaches are often complementary and differ in their target coverage, spatial resolution, and throughput.

Current state of the art techniques comprise combining, e.g. via laser microdissection, microscopy for a phenotype evaluation, and targeted molecular biology. These techniques may be expensive and laborious, such that imprecise targeting or identification of regions of interest for a laser dissection experiment can be costly.

Accordingly, there is a need to address the problem of inefficient and underperforming methods for analyzing samples using microscopy in combination with a further technique.

### Summary

To address the challenges in the state of the art, novel methods and systems for adapting at least one step in a sequence of steps for processing and analyzing a sample are disclosed.

In an embodiment, a method comprises capturing, by a microscope, at least one image of a first prepared sample; identifying at least one target or area of interest in the at least one image using a neural network; analyzing at least a part of the sample, the part of the sample corresponding to the identified at least one target or area of interest; and adapting (110), based on a comparison of a result of the analysis of the at least a part of the sample with data obtained from the at least one image of the first prepared sample, at least one of: a preparation of a second sample, capturing of at least one image of a second prepared sample, and the neural network.

By adapting, based on a comparison of a result of an analysis of at least a part of a sample with data obtained from at least one image of the first prepared sample, at least one of: a preparation of a second sample, capturing of at least one image of a second prepared sample, and the neural network, an improved method for increasing the efficiency and precision in processing and analyzing a sample is provided.

According to aspects, the analyzing of at least a part of the sample comprises extracting the part of the sample, wherein the analyzing at least a part of sample comprises analyzing the extracted part of the sample. The analyzing at least a part of the sample may comprise using at least one of: laser microdissection (LMD), laser capture microdissection (LCM), tissue dissolving and subsequent fluorescence-activated cell sorting (FACS), physical partial tissue extraction, e.g. by means of a scalpel or needle, micro/patch pipette whole cell or cytosol extraction (electrophysiology), a protein extraction method, tissue lysis and fluorescence-activated cell sorting, FACS sorting, immunomagnetic cell sorting, spatial transcriptomics, spatial multitomics, indirect approaches, a next generation sequencing (NGS) method, a ribonucleic acid sequencing (RNAseq) method, microarrays, a real-time polymerase chain reaction (qPCR) method, a blotting method, and mass spectrometry (MS).

In an aspect, the microscope comprises one of an epifluorescence microscope and a confocal microscope, and the at least a part of the first prepared sample is analyzed using at least one of an electron microscope, a scanning electron microscope (SEM), a focused ion beam-scanning electron microscope (FIB-SEM), transmission electron microscopy (TEM), correlative light-electron microscopy (CLEM), cryogenic correlative light-electron microscopy (CryoCLEM).

According to aspects, at least one of the first and the second sample is prepared for identification of at least one component of the respective sample using at least one of a dye, an ion label, an anti-body dilution, a fluorescence in situ hybridization (FISH) probe, a fluorophore, and a detergent treatment. The component of the respective sample may be one of a single nuclei, a cell compartment, an intracellular compartment, a pathogen, a virus, a bacterium, a fungus, single cells and cell clusters.

According to aspects, the method further comprises: obtaining data associated with at least one of a preparation of the first sample, the capturing of the at least one image of the first prepared sample, the at least one image of the first prepared sample, and the result of the analysis of the at least a part of the sample; and storing the data in a repository as a single data point. The repository may comprise a plurality of data points corresponding to at least one of different parameters for preparing a sample, different parameters for capturing of at least one image of a prepared sample, different targets or area of interests, different samples and different types of samples. The adapting of the at least one of the preparation of the second sample, the capturing of the at least one image of the second prepared sample, and the neural network may be based on an analysis of the plurality of data points.

By generating a repository and using the data in the repository to adapt at least one step in a sequence of steps for processing and analyzing a sample as claimed, a measurement accuracy can be increased. For example, the data in the repository may be analyzed to gain information about how to improve processing and analyzing of a sample with respect to a specific target.

Additionally or alternatively, the method may further comprise generating, based on the plurality of data points, training data for at least one neural network for the step of identifying the at least one target or area of interest in at least one image. The method may comprise fine-tuning the neural network for the step of identifying at least one target or area of interest in at least one image based on the training data. The method may comprise training a set of neural networks for the step of identifying at least one target or area of interest in at least one image based on the training data.

This allows improving the neural network for a precise identification of at least one target or area of interest in at least one image captured by the microscope. Further, new neural networks may be develop to precisely detect and identify specific structures or components in the sample.

According to aspects, the comparison of the result of the analysis of the at least a part of the first prepared sample with data obtained from the at least one image of the first prepared sample comprises correlating signal strengths associated with one of a dye, an ion label, an anti-body dilution, a fluorescence in situ hybridization, FISH, probe, a fluorophore, a detergent treatment applied to the first sample and obtained from the at least one image of the first prepared sample with molecular content of the analyzed part of the first prepared sample obtained from the result of the analysis of the at least a part of the first prepared sample. The comparison of the result of the analysis of the at least a part of the first prepared sample with data obtained from the at least one image of the first prepared sample may comprise combining a phenotype evaluation and a genotype evaluation.

In an embodiment, a system for generating training data for a neural network is provided. The system comprises a microscope configured to capture at least one image of a sample; at least one processor configured to identify at least one target or area of interest associated with the at least one target in the at least one image; and an extractor configured to extract a part of the sample corresponding to the identified at least one target or area of interest. The system is configured to analyze the extracted part of the sample and the system is configured to generate training data for training a neural network based on the at least one image of the object and a result of the analysis of the extracted part of the sample. The training data may associate phenotype information obtainable from one or more images with at least one of genotype information, proteotype information and transcriptomic profile information obtainable from analyzing the extracted part of the sample. The area of interest may correspond to the identified target. The result of the analysis of the extracted part may comprise information about a molecular content of the extracted part. A target of the at least one target may be one of a single nuclei, a cell compartment, an intracellular compartment, a pathogen , a virus, a bacterium, a fungus, single cells, and cell clusters. The sample may comprise tissue.

By generating training data as claimed, neural networks can be trained for the technical purpose of precisely identifying a target in an image, where labels of the training data may be obtained from an analysis of only a part of the sample to precisely and reliably identify components, such as specific cells or single nuclei, of the sample. For the analysis of the part of the sample, methods may be used that are not based on images. For example, the part of the sample may be analyzed to gain information about a molecular content of the extracted part, e.g. by using mass spectrometry. This allows labeling the training data with labels, which cannot be obtained from images of the sample, and can accelerate a measurement or an experiment.

The microscope may comprise at least one of a fluorescence microscope, a confocal microscope, a wide field microscope, a light sheet microscope, a super resolution microscope, a X-ray microscope, an electron microscope, a scanning probe microscope, and a transmission electron microscope.

The extractor may use at least one of laser microdissection, LMD, fluorescent-activated cell sorting, FACS, scalpel, needle, pipette and a focused ion beam-scanning electron microscope, FIB-SEM, to extract the part of the sample corresponding to the identified at least one target or area of interest.

The system may use at least one of polymerase chain reaction (PCR) based like qPCR, microarrays, mass spectrometry, MS, and a next generation sequencing, NGS, method, to analyze the extracted part of the sample.

In a further embodiment, a computer-readable storage medium having computer-executable instructions stored thereon is provided. When executed by one or more processors, the computer-executable instructions perform at least a part of the method for adapting at least one step in a sequence of steps for processing and analyzing a sample described above.

The following detailed description and accompanying drawings provide a more detailed understanding of the nature and advantages of the present invention.

### Short Description of the Figures

The accompanying drawings are incorporated into and form a part of the specification for the purpose of explaining the principles of the embodiments. The drawings are not to be construed as limiting the embodiments to only the illustrated and described embodiments of how they can be made and used. Further features and advantages will become apparent from the following and more particularly from the description of the embodiments, as illustrated in the accompanying drawings, wherein:
**Figure 1** illustrates a process flow diagram of a method for adapting at least one step in a sequence of steps for processing and analyzing a sample in accordance with at least one embodiment,
**Figure 2** illustrates an example architecture of a system in accordance with embodiments, and
**Figure 3** illustrates a process flow diagram of a method for generating training data for a neural network according to embodiments.

### Detailed Description

Described herein are systems and methods for adapting at least one step in a sequence of steps for processing and analyzing a sample, and for generating training data for a neural network. For purposes of explanation, numerous examples and specific details are set forth in order to provide a thorough understanding of the described embodiments. Embodiments as defined by the claims may include some or all of the features in these examples alone or in combination with other features described below, and may further include modifications and equivalents of the features and concepts described herein. The illustrative embodiments will be described with reference to the drawings wherein elements and structures are indicated by reference numbers. Further, where an embodiment is a method, steps and elements of the method may be combinable in parallel or sequential execution. As far as they are not contradictory, all embodiments described below can be combined with each other.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

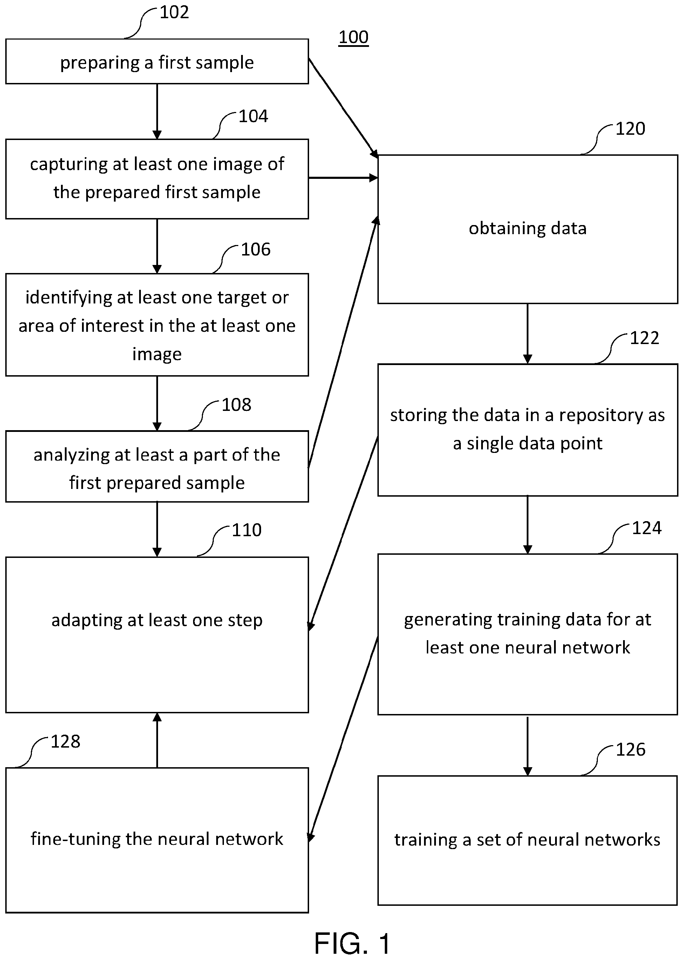

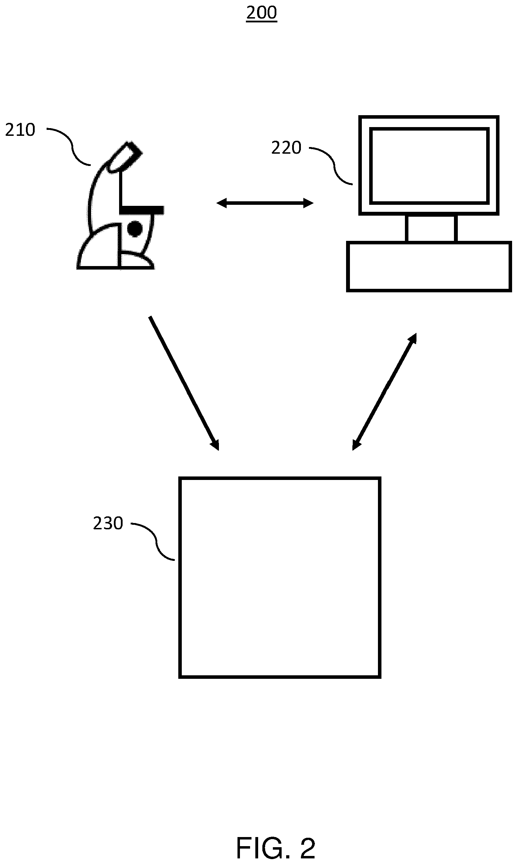

Some embodiments relate to a microscope comprising a system as described in connection with one or more of the Figs. 1 to 3. Alternatively, a microscope may be part of or connected to a system as described in connection with one or more of the Figs. 1 to 3. Fig. 2 shows a schematic illustration of a system 200 configured to perform a method described herein. The system 200 comprises a microscope 210 and a computer system 220. The microscope 210 is configured to take images and is connected to the computer system 220. The computer system 220 is configured to execute at least a part of a method described herein. The computer system 220 may be configured to execute a machine learning algorithm. The computer system 220 and microscope 210 may be separate entities but can also be integrated together in one common housing. The computer system 220 may be part of a central processing system of the microscope 210 and/or the computer system 220 may be part of a subcomponent of the microscope 210, such as a sensor, an actor, a camera or an illumination unit, etc. of the microscope 210.

The computer system 220 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 220 may comprise any circuit or combination of circuits. In one embodiment, the computer system 220 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system X20 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 220 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 220 may also include a display device, one or more speakers, and a keyboard and/or controller, which can include a mouse, trackball, touch screen, voice-recognition device, or any other device that permits a system user to input information into and receive information from the computer system 220.

Some or all of the method steps may be executed by (or using) a hardware apparatus, like for example, a processor, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm, such as a neural network. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

Spatial Biology is defined as the study of tissues within their own 2D or 3D context. For example, the spatial architecture of a cell can be mapped and interactions of the cell with its surroundings can be determined. Spatial biology enables single-cell analysis. Through spatial biology tools, information can be obtained that would not be possible to obtain by sequencing. Spatial biology can be used for studying oncology, immune-oncology, neurobiology, and even COVID research.

Using immunofluorescence and next-generation sequencing together, a user can ascertain how transcriptional dynamics vary within a spatial context. Spatial information can be obtained at various scales, including at the tissue, single cell, and subcellular levels.

**Figure 1** is a process flow diagram of an exemplary method 100 for adapting at least one step in a sequence of steps for processing and analyzing a sample in accordance with an embodiment.

At step 102, the method 100 comprises preparing a first sample. The first sample may be prepared for identification of at least one component in the first sample using at least one of a dye, an ion label, an anti-body dilution, a fluorescence in situ hybridization, FISH, probe, a fluorophore, and a detergent treatment. For example, the first sample may be prepared using a staining technique, such as immunogold labeling or immunogold staining (IGS).

At step 104, at least one image of the first prepared sample is captured by a microscope. The microscope may comprise at least one of a fluorescence microscope, a confocal microscope, a wide field microscope, a light sheet microscope, a super resolution microscope, an X-ray microscope, an electron microscope, a scanning probe microscope, and a transmission electron microscope.

At step 106, at least one target or area of interest is identified in the at least one image using a neural network. The neural network may be a convolutional neural network (CNN), such as a deep CNN. The target may correspond to an area of interest. The neural network may be a machine learning algorithm. The neural network may be trained for identification of targets or areas of interest corresponding to respective targets. Targets may be one or more of single cells, single nuclei, events, etc. The neural network may be trained based on an image-based dataset.

At step 108, at least a part of the first prepared sample is analyzed. The part of the first prepared sample may correspond to the identified at least one target or area of interest. Steps 104 and 106 may be regarded as a first analysis method, and step 108 may correspond to a second analysis method different from the first analysis method. The analyzing at least a part of the sample may comprise using at least one of: laser microdissection (LMD), laser capture microdissection (LCM), tissue dissolving and subsequent fluorescence-activated cell sorting (FACS), physical partial tissue extraction, e.g. by means of a scalpel or needle, micro/patch pipette whole cell or cytosol extraction (electrophysiology), a protein extraction method, tissue lysis and fluorescence-activated cell sorting, FACS sorting, immunomagnetic cell sorting, spatial transcriptomics, spatial multi-omics, indirect approaches, a next generation sequencing (NGS) method, a ribonucleic acid sequencing (RNAseq) method, microarrays, a real-time polymerase chain reaction (qPCR) method, a blotting method, and mass spectrometry (MS).

In an example, the microscope comprises one of an epifluorescence microscope and a confocal microscope, and the at least a part of the first prepared sample is analyzed using at least one of an electron microscope, a scanning electron microscope, SEM, a focused ion beam-scanning electron microscope, FIB-SEM, transmission electron microscopy, TEM, correlative light-electron microscopy, CLEM, cryogenic correlative light-electron microscopy, CryoCLEM

Step 108 may comprise extracting the part of the first prepared sample from the first prepared sample. For example, the part of the first prepared sample may be extracted by performing laser microdissection. Alternatively, the part of the first prepared sample may be extracted by creating a lamella with a FIB-SEM. The analyzing of the at least a part of the first prepared sample comprises analyzing the extracted part of the first prepared sample. For example, the extracted part of the first prepared sample may be analyzed by means of mass spectrometry. Alternatively, the extracted part of the sample may be analyzed with at least one suitable downstream method, such as one or more of NGS, MS, microarray etc., to generate biomolecule data in spatial context or a combination of multiple downstream techniques, such as subsequent TEM imaging and one or more of NGS, MS, and microarray.

At step 110, at least one step of method 100 is adapted for processing and analyzing a second sample. The adaptation is performed based on a comparison of a result of the analysis of the at least a part of the first prepared sample in step 108 with data obtained from the at least one image of the first prepared sample. The adaptation comprises adapting at least one of step 102, step 104, step 106 and step 108. For example, at least one of: a preparation of a second sample, capturing of at least one image of a second prepared sample, the neural network, and an analysis method for analyzing at least a part of the second sample may be adapted. Adapting the neural network may comprise fine-tuning the neural network for the step of identifying at least one target or area of interest in at least one image based on training data, or replacing the neural network with a different neural network for the step of identifying at least one target or area of interest in at least one image. A different neural network may be used to identify different targets.

The comparison of the result of the analysis of the at least a part of the first prepared sample with the data obtained from the at least one image of the first prepared sample may comprise correlating signal strengths associated with one of a dye, an ion label, an anti-body dilution, a fluorescence in situ hybridization, FISH, probe, a fluorophore, and a detergent treatment applied to the first sample and obtained from the at least one image of the first prepared sample with molecular content of the analyzed part of the first prepared sample obtained from the result of the analysis of the at least a part of the first prepared sample.

The comparison of the result of the analysis of the at least a part of the first prepared sample with data obtained from the at least one image of the first prepared sample may comprise combining a phenotype evaluation and a genotype evaluation.

In an example, data obtained from the captured image or the identified target or area of interest is compared and/or correlated with data obtained from the analysis in step 108. The comparison may comprise comparing signals of tagged proteins or nucleic acids (e.g. RNA) with relative expression levels from the downstream method used to analyze the sample or part of the sample. This comparison allows balancing an amount of tags (e.g. antibodies or FISH probe) and choosing a different fluorophore for the next experiment. In addition, new potential markers, such as biomarkers, can be discovered and tagged for upcoming experiments. In addition, the type of tagging fluorophore can be adjusted: e.g. if something is relatively high expressed, a less bright tag can be used or a tag which does not match perfectly the imaging device properties for the next sample, while a lower expressed target can be tagged with a much brighter, easier to detect fluorophore for the next sample. In case a signal obtained from the at least one image does not match the outcome of the analysis, such as a determined expression level, the method for processing and analyzing a sample can be improved to achieve a match of the fluorescence signals obtained from the at least one image and true molecular expression from analysis. This can improve experiments also without downstream processing (pure imaging based) to achieve reliable correlation results of signal strength and true molecular expressions.

By combining all available information from the sample in a reliable feedback loop, the method 100 can be improved by adapting sample preparation, imaging and targeting of regions of interest for upcoming experiments. For example, this can be done by selecting a smart combination of expression levels with smart labels in dependence of binding properties of markers and detection of tags with the corresponding available system.

At step 120, data associated with at least one of a preparation of the first sample, the capturing of the at least one image of the first prepared sample, the at least one image of the first prepared sample, and the result of the analysis of the at least a part of the sample can be obtained. In step 122, the data can be stored in a repository as a single data point. The repository may comprise a plurality of data points corresponding to at least one of different parameters for preparing a sample, different parameters for capturing of at least one image of a prepared sample, different targets or area of interests, different samples and different types of samples. For example, all sample preparation steps can be tracked to obtain information regarding one or more of an embedding, a fixation, dyes, a dye concentration, anti-body dilutions, FISH probes, fluorophores, detergent treatments etc. of the sample. Data associated with the capturing of the at least one image of the first prepared sample may comprise information about the microscope, such as one or more of available filter sets, illumination sources, laser wavelengths, detector efficiencies etc.

The data in the repository can be used or analyzed to find patterns to modify step 102, to modify sample preparation; to modify step 104, to modify the image acquisition method and/or parameters, such as an exposure time, and to expand the data in the repository.

The data in the repository can be used to improve the training of neural networks or to specify a neural network for more specific target identification.

For example, data in the repository from multiple similar experiments can be used to target specific pathways, such as to target involved proteins and/or nucleic acids and their modifications, for further investigations, such as to determine intracellular spatial context and pathway validation - e.g. by high-resolution imaging to validate interactions using STED or EM, of known and potential new pathways or involved molecules.

As indicated by the arrow from step 122 to step 110, the adapting of the at least one of the preparation of the second sample, the capturing of the at least one image of the second prepared sample, and the neural network may additionally be based on an analysis of the plurality of data points. For example, results of combined imaging data and downstream measurements can be used for improved targeting in laser microdissection for successive experiments. Insights regarding antibody staining and true, e.g. MS-verified (OR CryoTEM) protein content of single cells can be obtained from the data in the repository. This also allows to improve antibody tagging and FISH (fluorescence in situ hybridization) or related or combined technologies in general for more quantitative reliable results. The data in the repository can be used to precisely improve the process itself.

Using the repository, such as results of the data comparison, allows correlation of LMD downstream generated information, such as one of genotype, "proteotype" etc., with spatial image information and to identify special clusters of cells or individual cells for the next run or experiment. For example, by analyzing the data in the repository or combining a result of the analysis in step 108 with the at least one image obtained in step 104, it can be determined whether analysis results, such as some individual cells or a cell cluster displaying an activity or lack of signal cascaded proteins, match spatial properties from the spatial imaging context, such as shape parameters, distances to other cells or cell clusters and/or appearance of the cell(s) or fluorescence pattern alterations from immunofluorescence of FISH. These imaging and LMD downstream generated correlation within spatial context can serve for more specific AI training options and further improved sample preparation and target tagging.

At step 124, training data for at least one neural network for the step of identifying at least one target or area of interest in at least one image may be generated based on the plurality of data points in the repository.

The training data may be used to fine-tuning the neural network for the step of identifying at least one target or area of interest in at least one image based on the training data in step 128. Fine-tuning refers to using the weights of an already trained network as the starting values for training a new network. Fine-tuning may comprise freezing one or more layers and/or one or more weights, such that not all weights can be adjusted. Alternatively or additionally, the learning rate may be reduced during the fine-tuning.

In step 126, the training data may be used to train a set of neural networks for the step of identifying at least one target or area of interest in at least one image based on the training data. The set of neural networks may comprise one or more neural networks.

In an example, tissue is imaged with high-resolution microscopy in a first step. In a second step, machine learning is applied to find regions of interest in one or more images of the step for extraction. A part of the sample corresponding to the regions of interest is processed using laser microdissection. Other methods may be used to dissect sample parts. The sample parts may be analyzed with ultra-high sensitive mass spectrometry. Results of the analysis may be further analyzed using bioinformatics and serve researchers and clinicians as an improved data resource. The bioinformatics data resources may be used to train the neural network to increase specificity of the algorithm to identify target regions of interest more specifically, e.g. by a suitable mix of biomarkers.

Embodiments combine microscopy (phenotype evaluation) with the underlying molecular biology pattern (genotype evaluation). Examples of these combinations include evaluation in fluorescence (epi-fluorescence) microscopy, confocal microscopy, light sheet microscopy and/or widefield microscopy, such as slide scanner, brightfield microscopy, and laser microdissection to extract specific homogeneous microscopic target areas, such as single nuclei, single cells, cell clusters, etc., from heterogeneous tissue for molecular downstream analysis. The microscope may be configured to record and store images, tilescans and/or metadata, such as relative positioning, type of sample, type of sample carrier, microscopy system settings, such as one or more of light exposure, filtersets, wavelengths, etc.

The molecular biology downstream analysis may be Next Generation Sequencing, Microarrays, real-time qPCR, Mass Spectrometry, blots etc. Other approaches without laser microdissection may include one of tissue lysis/dissolving, and FACS sorting special slides.

In another embodiment, different microscopes are combined comprising two or more of a light microscope, such as an epi-fluorescence and/or confocal microscope, electron microscope, such as SEM or FIB-SEM, and TEM. The images may be captured under cryogenic conditions using CryoCLEM.

**Figure 2** shows a system 200 comprising a microscope 210, a computer system 220 comprising at least one processor, and an extractor 230. The system 200 may be configured to perform all or a part of the method 100.

In an embodiment, microscope 210 is configured to capture at least one image of a sample. Computer system 220 may be configured to identify at least one target or area of interest associated with the at least one target in the at least one image. The extractor 230 may be configured to extract a part of the sample corresponding to the identified at least one target or area of interest. The system 200 may be configured to analyze the extracted part of the sample. Results of the analysis of the extracted part may comprise information about a molecular content of the extracted part. A target of the at least one target comprises one of a single nuclei, a cell compartment, an intracellular compartment, a pathogen, a virus, a bacterium, a fungus, single cells, and cell clusters.

The system 200 may be configured to generate training data for a neural network based on the at least one image of the sample and results of the analysis of the extracted part of the sample. The training data may associate phenotype information obtainable from one or more images with at least one of genotype information, proteotype information and transcriptomic profile information obtainable from analyzing extracted parts of the samples.

The microscope 210 may comprise at least one of a fluorescence microscope, a confocal microscope, a wide field microscope, a light sheet microscope, a super resolution microscope, a X-ray microscope, an electron microscope, a scanning probe microscope, and a transmission electron microscope.

The extractor 230 may use at least one of laser microdissection, fluorescent-activated cell sorting, a scalpel, a needle, a pipette and a focused ion beam-scanning electron microscope to extract the part of the sample corresponding to the identified at least one target or area of interest.

The system 200 may use at least one of polymerase chain reaction (PCR) based like qPCR, microarrays, mass spectrometry, MS, and a next generation sequencing, NGS, method, to analyze the extracted part of the sample.

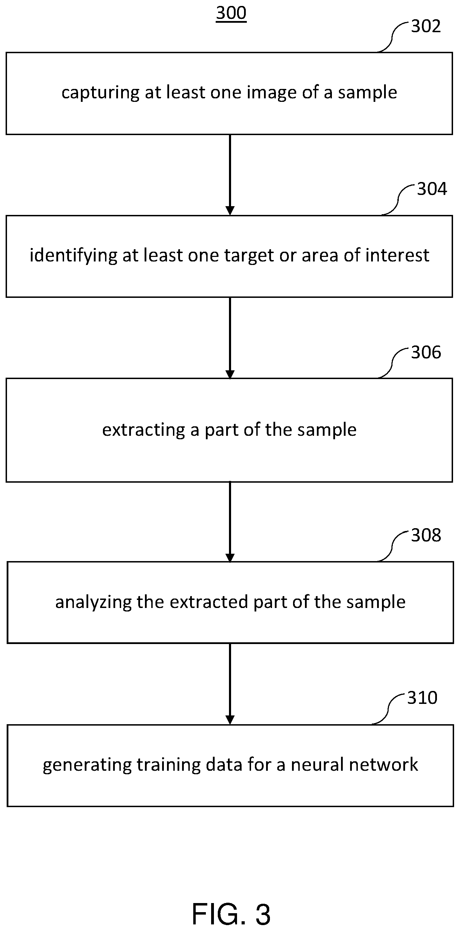

**Figure 3** is a process flow diagram of an exemplary method 300 for generating training data for training a neural network in accordance with an embodiment. The method 300 may be performed by the system 200.

At step 302, at least one image of a sample is captured. The at least one image of the sample may be captured by a microscope, such as microscope 210.

At step 304, at least one target or area of interest associated with the at least one target is identified in the at least one image.

At step 306, a part of the sample corresponding to the identified at least one target or area of interest is extracted. The part of the sample may be extracted by extractor 230.

At step 308, the extracted part of the sample may be analyzed.

At step 310, training data for training a neural network may be generated based on the at least one image of the sample and results of the analysis of the extracted part of the sample. For example, the neural network may be a convolutional neural network. The training data may comprise images and corresponding labels. The labels may be obtained from the results of the analysis of the extracted part of the sample. The training data may combine imaging (phenotype) information and measured molecular content (genotype) information. The training data may be saved in a cloud or a computing device. A neural network may be trained with the training data. The training may be performed in the cloud or on the computing device. A trained neural network may be deployed to a computing system such as computing system 220.

Embodiments allow improving a sequence of steps for processing and analyzing a sample over time for efficiently performing experiments. For example, identification of targets or regions of interest can be improved compared to an initial experiment by adapting a preparation of a second sample, a capturing of at least one image of a second prepared sample, and the neural network based on a comparison of data obtained from the at least one image of a first prepared sample with a result of an analysis of at least a part of the first prepared sample. Additionally, embodiments allow targeting known or new biomarkers according to gained knowledge of imaging (phenotype) and measured molecular content (genotype).

### List of Reference Signs

- 100,300: method
- 102-128; 302-310: method steps
- 210: microscope
- 220: computer system
- 230: extractor

## Claims

1. A method (100) for adapting at least one step in a sequence of steps for processing and analyzing a sample, the method (100) comprising:
capturing (104), by a microscope, at least one image of a first prepared sample;
identifying (106) at least one target or area of interest in the at least one image using a neural network;
analyzing (108) at least a part of the first prepared sample, the part of the first prepared sample corresponding to the identified at least one target or area of interest; and
adapting (110), based on a comparison of a result of the analysis of the at least a part of the first prepared sample with data obtained from the at least one image of the first prepared sample, at least one of:
a preparation of a second sample,
capturing of at least one image of a second prepared sample, and
the neural network.

2. The method of claim 1, wherein the analyzing at least a part of the first prepared sample comprises extracting the part of the first prepared sample, wherein the analyzing the at least a part of the first prepared sample comprises analyzing the extracted part of the first prepared sample.

3. The method of claim 1 or claim 2, wherein the analyzing at least a part of the first prepared sample comprises using at least one of:
laser microdissection, LMD,
laser capture microdissection, LCM,
Tissue dissolving and subsequent fluorescence-activated cell sorting, FACS,
physical partial tissue extraction,
micro or patch pipette whole cell or cytosol extraction,
a protein extraction method,
tissue lysis or tissue dissolving and fluorescence-activated cell sorting, FACS sorting,
immunomagnetic cell sorting,
spatial transcriptomics,
spatial multi-omics,
indirect approaches,
a next generation sequencing, NGS, method,
a ribonucleic acid sequencing, RNAseq, method,
microarrays,
a real-time polymerase chain reaction, qPCR, method,
a blotting method, and
mass spectrometry, MS.

4. The method of one of claims 1 to 3, wherein the microscope comprises one of an epifluorescence microscope and a confocal microscope, and
wherein the at least a part of the first prepared sample is analyzed using at least one of an electron microscope, a scanning electron microscope, SEM, a focused ion beam-scanning electron microscope, FIB-SEM, transmission electron microscopy, TEM, correlative light-electron microscopy, CLEM, cryogenic correlative light-electron microscopy, CryoCLEM.

5. The method of one of claims 1 to 4, wherein at least one of the first and the second sample is prepared (102) for identification of at least one component in the at least one of the first and the second sample using at least one of a dye, an ion label, an anti-body dilution, a fluorescence in situ hybridization, FISH, probe, a fluorophore, and a detergent treatment.

6. The method of one of claims 1 to 5, further comprising:
obtaining (120) data associated with at least one of a preparation of the first sample, the capturing of the at least one image of the first prepared sample, the at least one image of the first prepared sample, and the result of the analysis of the at least a part of the sample; and
storing (122) the data in a repository as a single data point,
wherein the repository comprises a plurality of data points corresponding to at least one of different parameters for preparing a sample, different parameters for capturing of at least one image of a prepared sample, different targets or area of interests, different samples and different types of samples.

7. The method of claim 6, wherein the adapting of the at least one of the preparation of the second sample, the capturing of the at least one image of the second prepared sample, and the neural network is based on an analysis of the plurality of data points.

8. The method of claim 6, further comprising generating (124), based on the plurality of data points, training data for at least one neural network for the step of identifying the at least one target or area of interest in at least one image.

9. The method of claim 8, further comprising at least one of:
fine-tuning (128) the neural network for the step of identifying at least one target or area of interest in at least one image based on the training data; and
training (126) a set of neural networks for the step of identifying at least one target or area of interest in at least one image based on the training data.

10. The method of one of claims 1 to 9, wherein at least one of:
the comparison of the result of the analysis of the at least a part of the first prepared sample with data obtained from the at least one image of the first prepared sample comprises correlating signal strengths associated with one of a dye, an ion label, an anti-body dilution, a fluorescence in situ hybridization, FISH, probe, a fluorophore, a detergent treatment applied to the first sample and obtained from the at least one image of the first prepared sample with molecular content of the analyzed part of the first prepared sample obtained from the result of the analysis of the at least a part of the first prepared sample, and
the comparison of the result of the analysis of the at least a part of the first prepared sample with data obtained from the at least one image of the first prepared sample comprises combining a phenotype evaluation and a genotype evaluation.

11. A system (200) for generating training data for a neural network, the system (200) comprising:
a microscope (210) configured to capture at least one image of a sample;
at least one processor configured to identify at least one target or area of interest associated with the at least one target in the at least one image; and
an extractor (230) configured to extract a part of the sample corresponding to the identified at least one target or area of interest,
wherein the system (200) is configured to analyze the extracted part of the sample, and
wherein the system (200) is configured to generate training data for a neural network based on the at least one image of the sample and results of the analysis of the extracted part of the sample.

12. The system of claim 11, wherein the training data associates phenotype information obtainable from one or more images with at least one of genotype information, proteotype information and transcriptomic profile information obtainable from analyzing extracted parts of samples.

13. The system of claim 11 or claim 12, wherein the results of the analysis of the extracted part comprise information about a molecular content of the extracted part.

14. The system of one of claims 11 to 13, wherein at least one of:
a target of the at least one target is one of a single nuclei, a cell compartment, an intracellular compartment, a pathogen, a virus, a bacterium, a fungus, single cells and cell clusters, and
the sample comprises tissue.

15. The system of one of claims 11 to 14, wherein at least one of:
the microscope comprises at least one of a fluorescence microscope, a confocal microscope, a wide field microscope, a light sheet microscope, a super resolution microscope, a X-ray microscope, an electron microscope, a scanning probe microscope, and a transmission electron microscope,
the extractor uses at least one of laser microdissection, LMD, fluorescent-activated cell sorting, FACS, scalpel, needle, pipette and a focused ion beam-scanning electron microscope, FIB-SEM, to extract the part of the sample corresponding to the identified at least one target or area of interest, and
the system uses at least one of polymerase chain reaction, PCR based like qPCR, microarrays, mass spectrometry, MS, and a next generation sequencing, NGS, method, to analyze the extracted part of the sample.
